# EUROPÄISCHE PATENTANMELDUNG

(11) **EP 0 692 777 A1**
(43) Veröffentlichungstag der Anmeldung: **17.01.1996**
(21) Anmeldenummer: 95110897.6
(22) Anmeldetag: 12.07.1995
(51) Int. Cl.: G09F 13/18

(54) **Beleuchtete Anzeigetafel**

(30) Priorität: 16.07.1994 DE 4425246
(71) Anmelder: Schöniger, Karl-Heinz, D-73732 Esslingen (DE)
(72) Erfinder: Schöniger, Karl-Heinz, D-73732 Esslingen (DE)
(74) Vertreter: Vetter, Hans, Dipl.-Phys. Dr.

(57) **Zusammenfassung**

Es wird eine beleuchtete Anzeigetafel, insbesondere ein Werbeträger, ein Hinweisschild, ein Verkehrsschild od.dgl., vorgeschlagen, das aus einer Platte (10) aus durchsichtigem Material besteht, die an wenigstens einer seitlichen Begrenzungskante wenigstens ein die Platte (10) kantenseitig beleuchtendes Leuchtelement (13) aufweist. Wenigstens eine der beiden Flachseiten der Platte (10) ist wenigstens teilweise mit einer Trübfolie (11) überzogen, wobei die mit der Trübfolie (11) versehene Platte (10) zur Hinterleuchtung von an der von einem Betrachter aus gesehen vorderen Flachseite der Platte (10) anzubringenden Anzeigesymbolen (16) vorgesehen ist. Das an der Kontaktfläche zwischen Platte (10) und Trübfolie (11) von der Platte (10) in die Trübfolie (11) gelangende Licht wird dort infolge der Trübung gestreut, so daß die gesamte Trübfolie (11) aufleuchtet und eine gleichmäßig helle Fläche bildet, die zur Hinterleuchtung einer mit Anzeigesymbolen versehenen Platte geeignet ist.

## Beschreibung

Die Erfindung betrifft eine beleuchtete Anzeigetafel, insbesondere einen Werbeträger, ein Hinweisschild, ein Verkehrsschild od.dgl., bestehend aus einer Platte aus durchsichtigem Material, die an wenigstens einer seitlichen Begrenzungskante wenigstens ein die Platte kantenseitig beleuchtendes Leuchtelement aufweist, wobei die Platte zur Beleuchtung von Anzeigesymbolen vorgesehen ist.

Bei einer aus der DE 38 25 436 C2 bekannten Anzeigetafel dieser Art sind zur Beleuchtung kantenseitig Leuchtdioden in die als Lichtleitplatte dienende Platte eingelassen. An der vom Betrachter abgewandten Rückseite der Platte sind zu beleuchtende Anzeigesymbole fest mit der Platte verbunden. Da an den Kontaktflächen der Anzeigesymbole mit der Platte das ansonsten in der Platte total reflektierte Licht austritt, werden diese Anzeigesymbole beleuchtet und sind durch die durchsichtige Platte hindurch sichtbar.

Der Nachteil dieser bekannten Anordnung besteht darin, daß zum einen die Anzeigesymbole fest mit der Platte verbunden werden müssen, was ein Auswechseln sehr erschwert. Diese Anordnung eignet sich daher nicht für öfters auszuwechselnde Anzeigesymbole, wie Fahrpläne, Werbesymbole oder -graphiken u.dgl. Die Anordnung hinter der Platte würde darüber hinaus ein Auswechseln erschweren.

Weiterhin ist es aus der US 44 84 104 bekannt, eine Anzeigefläche von hinten her zu beleuchten, um dann zu beleuchtende Anzeigesymbole, -flächen oder -tafeln anbringen zu können, die von hinten her beleuchtet werden. Die bekannte Anordnung benötigt hierzu ein Gehäuse, in dem Leuchtelemente, wie Leuchtröhren, angeordnet sind. Der Nachteil dieser bekannten Anordnung besteht in einem relativ voluminösen Gehäuse, und es ist sehr schwierig, eine gleichmäßige Lichtverteilung über der von hinten beleuchteten Platte zu erreichen.

Eine Aufgabe der vorliegenden Erfindung besteht daher darin, eine sehr flache, gleichmäßig beleuchtete Anzeigetafel zum Hinterleuchten von Anzeigesymbolen oder -platten zu schaffen.

Diese Aufgabe wird erfindungsgemäß dadurch gelöst, daß wenigstens eine der beiden Flachseiten der Platte wenigstens teilweise mit einer Trübfolie überzogen ist, und daß die mit der Trübfolie versehene Platte zur Hinterleuchtung von an der von einem Betrachter aus gesehen vorderen Flachseite der Platte anzubringenden Anzeigesymbolen vorgesehen ist.

Die Trübfolie trägt nur unwesentlich zur Dicke der Gesamtanordnung bei, so daß diese im wesentlichen durch die relativ dünne Platte bestimmt ist. Somit kann eine beleuchtete Anzeigetafel in Form einer dünnen Platte erreicht werden. An der Berührungsfläche zwischen der Platte und der Trübfolie tritt das Licht aus der Platte aus und gelangt in die Trübfolie. Durch Lichtstreuung leuchtet die Trübfolie dadurch in ihrer Gesamtheit, was zu einer gleichmäßig beleuchteten Leuchtfläche dient, indem durch Lichtleitung in der Trübfolie noch Helligkeitsunterschiede ausgeglichen werden. Auf dieser Leuchtfläche können nun Anzeigesymbole, Anzeigeflächen, Anzeigeplatten od.dgl. angeordnet werden, die dann hinterleuchtet werden. Diese können unmittelbar vor der mit der Trübfolie versehenen Platte aufgehängt werden, z.B. auch beabstandet. Ein Auswechseln ist dadurch leicht möglich, was insbesondere im Falle von hinterleuchteten Fahrplänen, Bekanntmachungen, Werbeflächen od.dgl. von besonderem Vorteil ist. Durch die Trübfolie wird die die gleichmäßige Lichtverteilung beeinträchtigende Wirkung von Kratzern oder anderen Unebenheiten auf der Platte weitgehend ausgeglichen. Die gesamte Anzeigetafel kann sehr kostengünstig hergestellt werden, da eine handelsübliche Acrylglas- oder Glasplatte verwendet werden kann und Trübfolien als Meterware kostengünstig erhältlich sind.

Durch die in den Unteransprüchen aufgeführten Maßnahmen sind vorteilhafte Weiterbildungen und Verbesserungen der im Anspruch 1 angegebenen Anzeigetafel möglich.

Die Trübfolie ist vorzugsweise als selbstklebende Folie ausgebildet, da hierdurch ein Anbringen auf der Platte erleichtert und vereinfacht wird.

Die selbstleuchtende Wirkung der Trübfolie wird noch verstärkt durch eine ein vollflächiges Anhaften an der Platte verhindernde Oberflächenstruktur der Trübfolie, die beispielsweise genarbt oder genoppt sein kann. Darüber hinaus wird dadurch ein Ablösen bzw. eine Korrektur beim Aufkleben erleichtert.

Die beste Lichtwirkung und Lichtausbeute wird dadurch erreicht, daß die Trübfolie an derjenigen Flachseite der Platte angeordnet ist, an der die Anzeigesymbole angebracht werden. Eine zusätzliche Verbesserung wird noch dadurch erzielt, daß die nicht mit der Trübfolie versehene Flachseite der Platte mit einem Reflexions-Flächenelement versehen wird.

In vorteilhafter Weise kann die Platte auch beidseitig wenigstens teilweise mit Trübfolien versehen sein, wobei dann die mit den Trübfolien versehene Platte zur Ausleuchtung von zwei Anordnungen von Anzeigesymbolen zwischen diesen positioniert wird.

Alternativ hierzu kann auch die Trübfolie zwischen zwei Platten angeordnet sein, die an den nicht mit der Trübfolie in Kontakt stehenden Flachseiten mit Anordnungen von Anzeigesymbolen versehen sind. Auch hierdurch kann eine Anzeigetafel erreicht werden, die an beiden Seiten Anzeigeflächen aufweist. Hierzu ist die Trübfolie zweckmäßigerweise als doppelseitig selbstklebende Folie ausgebildet.

Die Symbole können zweckmäßigerweise an oder in einer im wesentlichen durchsichtigen Anzeigeplatte oder -folie angeordnet sein, die vor der Leuchtfläche der mit der Trübfolie versehenen Platte anbringbar ist.

Zur gezielten Beleuchtung von einzelnen Werbe- oder Informationsträgern kann die Trübfolie auch nur an solchen Flächen der Platte angebracht sein, die mit den mit den Anzeigesymbolen versehenen Flächen im wesentlichen koinzidieren. Hierdurch kann das Licht in ökonomischer Weise auf die wesentlichen Stellen konzentriert werden.

Um Lichtverluste an den Kanten der Platte zu vermeiden, sind die nicht als Einstrahlflächen für das wenigstens eine Leuchtelement vorgesehenen Kantenflächen verspiegelt. Als Leuchtelemente können hierbei Leuchtröhren oder in die Kanten der Platten eingesetzte Leuchtdioden dienen, die eine besonders energiesparende Ausleuchtung durch direktes Einbringen des Lichts in die Platte gewährleisten.

Ausführungsbeispiele der Erfindung sind in der Zeichnung dargestellt und in der nachfolgenden Beschreibung näher erläutert. Es zeigen:
- Fig. 1: ein erstes Ausführungsbeispiel mit einer einseitig an einer Platte angeklebten Trübfolie in einer Schnittdarstellung,
- Fig. 2: ein zweites Ausführungsbeispiel mit einer beidseitig mit Trübfolien versehenen Platte in einer Schnittdarstellung,
- Fig. 3: eine Vorderansicht auf einen Eckbereich der Anzeigetafel gemäß Fig. 2,
- Fig. 4: ein drittes Ausführungsbeispiel mit einer zwischen zwei Platten angeordneten Trübfolie und
- Fig. 5: eine Vorderansicht einer Anzeigetafel, die nur partiell mit einer Trübfolie und Anzeigeflächen versehen ist.

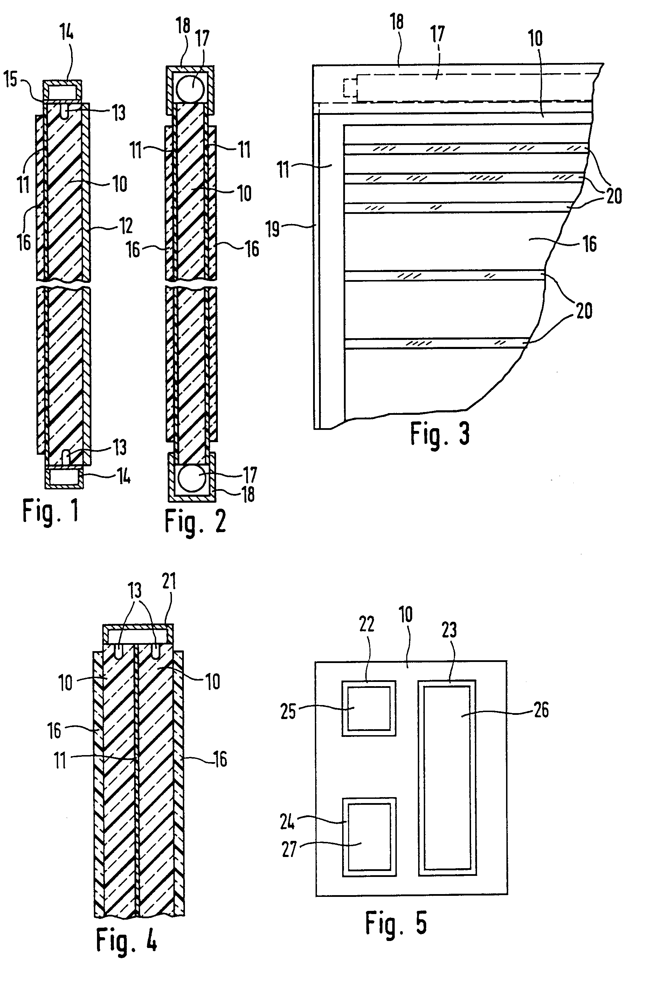

Die in Fig. 1 im Schnitt dargestellte Anzeigetafel besteht im wesentlichen aus einer durchsichtigen Lichtleitplatte, die im folgenden als Platte 10 bezeichnet wird. Diese Platte 10 besteht beispielsweise aus Acrylglas, einem anderen durchsichtigen Kunststoffmaterial oder aus Glas. An einer Flachseite dieser Platte 10 ist eine selbstklebende Trübfolie 11 aufgeklebt. Bei dieser Trübfolie handelt es sich um eine Kunststoffolie, die eine Trübung aufweist, beispielsweise kann diese Folie milchig, durchscheinend, opak od.dgl. ausgebildet sein. Wesentlich dabei ist, daß durch die Trübung eine Lichtstreuung auftritt. Diese Trübfolie kann auch zumindest auf der Klebeseite genarbt oder genoppt sein, so daß sie nicht vollflächig an der Platte 10 haftet und relativ leicht wieder von ihr gelöst werden kann. An der der Seite mit der Trübfolie 11 gegenüberliegenden Flachseite der Platte 10 ist eine Reflexions-Platte 12 angeordnet.

An den umfangsseitigen Kanten der Platte 10 sind Leuchtdioden 13 mittels entsprechender Bohrungen in die Platte 10 eingelassen, die über einen die Platte 10 umgreifenden Rahmen 14 mit einer Betriebsspannung versorgt werden. Diese Leuchtdioden 13 können je nach der gewünschten Lichtmenge an allen vier Seiten der Platte in engen Abständen oder in größeren Abständen oder nur an einzelnen Seiten der Platte angeordnet sein. Es kann sich dabei um Leuchtdioden nur einer Farbe oder auch um Leuchtdioden in verschiedenen Farben handeln, um verschiedene Farbeffekte zu erzielen. Um weißes Licht zu erzeugen, können auch rote, grüne und blaue Leuchtdioden gleichzeitig eingeschaltet werden. Im Rahmen 14 können auch in nicht dargestellter Weise elektronische Steuerschaltungen für die Leuchtdioden 13 untergebracht sein. Um Lichtverluste zu verhindern, sind die Kanten der Platte 10 mit einer reflektierenden Schicht 15 versehen, also beispielsweise verspiegelt.

An der mit der Trübfolie 11 versehenen Flachseite der Platte 10 ist eine Anzeigeplatte 16 angeordnet bzw. fixiert, wobei auch ein Abstand zwischen der Anzeigeplatte 16 und der Trübfolie 11 vorgesehen sein kann. Die Anzeigeplatte 16 kann dabei fest montiert oder aufgehängt sein. Sie ist als im wesentlichen durchsichtige Platte ausgebildet, an oder in der Anzeigesymbole angeordnet sind. Diese Anzeigesymbole sind beispielsweise Informationen, wie Fahrpläne, Bekanntmachungen, Hinweise od.dgl., oder Werbetexte, Werbegraphiken und Ähnliches. Bei der gesamten Anzeigetafel kann es sich auch um ein Verkehrsschild oder ein Hinweisschild handeln, wobei die Anzeigeplatte 16 dann die entsprechenden Darstellungen zeigt. Die dazustellenden Symbole können farblich vom übrigen Untergrund abgesetzt sein, der ebenfalls einfarbig oder mehrfarbig sein kann. Ebenso ist es möglich, die Anzeigesymbole ganz oder teilweise undurchsichtig auszubilden, so daß sie sich vom durchsichtigen Grund abheben. Der umgekehrte Fall ist ebenfalls möglich, also durchsichtige Anzeigesymbole auf einem undurchsichtigen Hintergrund. Wesentlich bei der Anzeigeplatte 16 ist es, daß sich die Anordnung zur Hinterleuchtung durch eine Lichtfläche eignet.

Die Wirkungsweise der dargestellten Anzeigetafel besteht im wesentlichen darin, daß das von den Leuchtdioden 13 erzeugte Licht in die Platte 10 gelangt und dort total reflektiert würde, wenn keine Trübfolie 11 vorhanden wäre. An den Kontaktflächen mit der Trübfolie 11 tritt das Licht jedoch aus der Platte 10 aus und in die Trübfolie 11 ein. Infolge der Trübung leuchtet die Trübfolie 11 durch Lichtstreuung auf, wobei eine gewisse Lichtleitung in der Trübfolie 11 für einen Ausgleich von etwaigen Helligkeitsunterschieden sorgt. Somit leuchtet die Trübfolie 11 als gleichmäßige, helle Lichtfläche. Dies wird noch durch die Reflexionsplatte 12 an der Rückseite der Platte 10 unterstützt. Durch diese gleichmäßig leuchtende Trübfolie 11 wird eine gleichmäßige Hinterleuchtung der Anzeigeplatte 16 erreicht, wobei die Anzeigeplatte 16 leicht ausgewechselt werden kann, beispielsweise wenn der Werbeträger oder die Informationen ausgetauscht oder aktualisiert werden sollen.

Das in den Fig. 2 und 3 dargestellte zweite Ausführungsbeispiel entspricht weitgehend dem ersten Ausführungsbeispiel. Gleiche oder gleich wirkende Elemente sind mit denselben Bezugszeichen versehen und nicht nochmals beschrieben.

Im Unterschied zum ersten Ausführungsbeispiel sind hier beide Flachseiten der Platte 10 mit Trübfolien 11 versehen, und an den Außenseiten der so gebildeten Anzeigetafel sind jeweils Anzeigeplatten 16 angeordnet. Somit können auf beiden Seiten der Platte 10 Informationen oder Darstellungen wiedergegeben werden, wobei die beiden Anzeigeplatten 16 identisch oder unterschiedlich ausgebildet sein können.

Zur Beleuchtung sind hier die obere und die untere Kante der Platte 10 mit Leuchtröhren 17 versehen, die ihr Licht über die Kanten in die Platte 10 einstrahlen. Ein kanalförmiges Gehäuse 18 schirmt die Leuchtröhren 17 nach außen ab. Die beiden seitlichen Kanten der Platte 10 sind mit einer reflektierenden Schicht 19 versehen. Diese kann sich auch an der oberen und unteren Kante im Bereich der Fassungen der Leuchtröhren 17 fortsetzen, die nicht zur Lichteinstrahlung benötigt werden. Selbstverständlich kann die Lichteinstrahlung auch hier an allen vier Kanten oder beispielsweise auch nur an einer Kante erfolgen, da die gleichmäßige Lichtverteilung durch die Platte 10 und die Trübfolie 11 gewährleistet ist. Die Anzeigeplatte 16 ist hier mit einer schematisch dargestellten Schrift 20 versehen.

Bei dem in Fig. 4 dargestellten dritten Ausführungsbeispiel sind wiederum gleiche oder gleich wirkende Elemente mit denselben Bezugszeichen versehen und nicht nochmals beschrieben. Hier ist eine Trübfolie 11 zwischen zwei Platten 10 angeordnet, die hier als doppelseitig selbstklebende Folie ausgebildet ist. An den beiden Außenseiten der beiden Platten 10 ist jeweils eine Anzeigeplatte 16 angeordnet. Auch bei dieser Anordnung kann die Platte 10 daher wie beim zweiten Ausführungsbeispiel an beiden Flachseiten Wiedergabe-Informationen und/oder Anzeigesymbole tragen. Beide Platten 10 sind hier - wie beim ersten Ausführungsbeispiel - mit Leuchtdioden 13 zur Beleuchtung versehen. Ein Rahmen 21 übergreift beide Platten 10. Die hier nicht im einzelnen dargestellte reflektierende Schicht an den Kanten kann sich auch randseitig an den äußeren Flachseiten der Platten 10 so weit erstrecken, daß die Leuchtdioden 13 abgeschirmt sind und nicht direkt nach außen strahlen können.

In Fig. 5 ist die Flachseite einer Platte 10 in der Vorderansicht dargestellt. Bei dieser Ausführung ist nicht die gesamte Flachseite der Platte 10 mit der Trübfolie 11 überzogen, sondern lediglich drei Bereiche 22 - 24. An diesen Bereichen 22 - 24 sind drei Anzeigeplatten 25 - 27 angeordnet. Da lediglich im Bereich der Anzeigeplatten 25 - 27 eine Hinterleuchtung erforderlich ist, reicht es aus, die Bereiche 22 - 24 mit der Trübfolie zu überziehen. An den übrigen Bereichen tritt kein Licht aus, das heißt, die Platte 10 bleibt dort im wesentlichen dunkel. Durch die Konzentrierung des Lichts an den Bereichen 22 - 24 ist dieses dort relativ intensiver, oder man kann die Lichtleistung entsprechend reduzieren.

Anstelle von Anzeigeplatten 16 bzw. 25 - 27 können selbstverständlich auch Anzeigefolien oder sonstige flächige Strukturen eingesetzt werden, die zur Hinterleuchtung geeignet sind.

Die Trübfolie 11 kann auch als sehr fein perforierte Folie ausgebildet sein, wobei die Perforationslöcher so klein sein sollen, daß sie optisch im wesentlichen nicht in Erscheinung treten. Vor allem, wenn sie strukturiert oder genoppt ist, können sich Lufteinschlüsse zwischen der Platte 10 und der Trübfolie 11 bei Sonneneinstrahlung oder sonstiger Erwärmung ausdehnen, wodurch die Gefahr einer Ablösung der Trübfolie besteht. Durch einer Perforation kann eine solche Ablösung verhindert werden. Zur nachträglichen Perforierung kann beispielsweise ein Nadelroller dienen, wie er zu Massagezwecken verwendet wird.

## Patentansprüche

1. Beleuchtete Anzeigetafel, insbesondere Werbeträger, Hinweisschild, Verkehrsschild, bestehend aus einer Platte aus durchsichtigem Material, die an wenigstens einer seitlichen Begrenzungskante wenigstens ein die Platte kantenseitig beleuchtendes Leuchtelement aufweist, wobei die Platte zur Beleuchtung von Anzeigesymbolen vorgesehen ist, dadurch gekennzeichnet, daß wenigstens eine der beiden Flachseiten der Platte (10) wenigstens teilweise mit einer Trübfolie (11) überzogen ist, und daß die mit der Trübfolie (11) versehene Platte (10) zur Hinterleuchtung von an der von einem Betrachter aus gesehen vorderen Flachseite der Platte (10) anzubringenden Anzeigesymbolen (16; 25 - 27) vorgesehen ist.

2. Anzeigetafel nach Anspruch 1, dadurch gekennzeichnet, daß die Trübfolie (11) als selbstklebende Folie ausgebildet ist.

3. Anzeigetafel nach Anspruch 1 oder 2, dadurch gekennzeichnet, daß die Trübfolie (11) eine ein vollflächiges Anhaften an der Platte verhindernde Oberflächenstruktur aufweist.

4. Anzeigetafel nach Anspruch 3, dadurch gekennzeichnet, daß die Trübfolie eine genarbte oder genoppte Oberflächenstruktur aufweist.

5. Anzeigetafel nach einem der vorhergehenden Ansprüche, dadurch gekennzeichnet, daß die Trübfolie (11) an derjenigen Flachseite der Platte (10) angeordnet ist, an der die Anzeigesymbole (16; 25 - 27) angebracht werden.

6. Anzeigetafel nach Anspruch 5, dadurch gekennzeichnet, daß die nicht mit der Trübfolie (11) versehene Flachseite der Platte (10) mit einem Reflexions-Flächenelement (12) versehen ist.

7. Anzeigetafel nach Anspruch 5, dadurch gekennzeichnet, daß die Platte (10) beidseitig wenigstens teilweise mit Trübfolien (11) versehen ist, und daß die mit den Trübfolien (11) versehene Platte (10) zwischen zwei Anordnungen von Anzeigesymbolen (16) positioniert ist.

8. Anzeigetafel nach einem der Ansprüche 1 bis 4, dadurch gekennzeichnet, daß die Trübfolie (11) zwischen zwei Platten (10) angeordnet ist, die an den nicht mit der Trübfolie (11) in Kontakt stehenden Flachseiten mit Anordnungen von Anzeigesymbolen (16) versehen sind.

9. Anzeigetafel nach Anspruch 8, dadurch gekennzeichnet, daß die Trübfolie (11) als doppelseitig selbstklebende Folie ausgebildet ist.

10. Anzeigetafel nach einem der vorhergehenden Ansprüche, dadurch gekennzeichnet, daß die Anzeigesymbole (16) an oder in einer im wesentlichen durchsichtigen Anzeigeplatte oder -folie angeordnet sind, die vor der mit der Trübfolie (11) versehenen Platte (10) anbringbar ist.

11. Anzeigetafel nach einem der vorhergehenden Ansprüche, dadurch gekennzeichnet, daß die Trübfolie (11) nur an solchen Flächen (22 - 24) der Platte (10) angebracht ist, die mit den mit den Anzeigesymbolen (25 - 27) versehenen Flächen im wesentlichen koinzidieren.

12. Anzeigetafel nach einem der vorhergehenden Ansprüche, dadurch gekennzeichnet, daß die nicht als Einstrahlflächen für das wenigstens eine Leuchtelement (13; 17) versehenen Kantenflächen der Platte (10) mit einer Reflexionsschicht versehen, insbesondere verspiegelt sind.

13. Anzeigetafel nach einem der vorhergehenden Ansprüche, dadurch gekennzeichnet, daß als Leuchtelemente (13; 17) Leuchtröhren oder in die Kanten der Platte (10) eingesetzte Leuchtdioden vorgesehen sind.

14. Anzeigetafel nach einem der vorhergehenden Ansprüche, dadurch gekennzeichnet, daß die Trübfolie (11) perforiert ist.
